**Europäisches Patentamt**

**European Patent Office**

**Office européen des brevets**

(19)

(11) Veröffentlichungsnummer : **0 147 533**
**B1**

(12) **EUROPÄISCHE PATENTSCHRIFT**

(45) Veröffentlichungstag der Patentschrift :
23.03.88

(21) Anmeldenummer : 84110640.4

(22) Anmeldetag : 06.09.84

(51) Int. Cl.⁴ : **A 01 C   7/02**

(54) Handsägerät.

(30) Priorität : 25.11.83 DE 3342705

(43) Veröffentlichungstag der Anmeldung :
10.07.85 Patentblatt 85/28

(45) Bekanntmachung des Hinweises auf die Patenterteilung : 23.03.88 Patentblatt 88/12

(84) Benannte Vertragsstaaten :
AT BE CH DE FR GB IT LI NL SE

(56) Entgegenhaltungen :
DE-C-   831 925
DE-C- 1 102 465
DE-U- 7 913 925
US-A- 1 879 111
US-A- 2 204 245
US-A- 3 031 984
Saat und Erntetechnik GmbH, Eschwege "Einkorndrille Pillenzwerg"
Maschinenfabrik Franz Kleine, Salzkotten "Betriebsanleitung und Ersatzteilliste für die Einkorndrille
JR2, 1963"

(73) Patentinhaber : **Wolf-Geräte GmbH**
**Gregor-Wolf-Strasse 16 Postfach 860 und 880**
**D-5240 Betzdorf/Sieg (DE)**

(72) Erfinder : **Orthey, Gebhard**
**Raiffeisenstrasse 10**
**D-5241 Neuaroth (DE)**

(74) Vertreter : **Koch, Günther, Dipl.-Ing. et al**
**Kaufingerstrasse 8**
**D-8000 München 2 (DE)**

**Beschreibung**

Die Erfindung bezieht sich auf ein Handsägerät mit einer am Boden abrollbaren Antriebsradscheibe und einem hiervon angetriebenen koaxial liegenden Zellenrad, das am Umfang Taschen zum Einzeltransport der Saatgutkörner aus einer oberen, sich über einem offenen Sektor des Zellenrades erstreckenden Aufnahmekammer nach einer in Bodennähe befindlichen Abgabestation aufweist, wobei zwischen Aufnahmekammer und Abgabestation der Umfang des Zellenrades von einer kreisbogenförmig gekrümmten Wand umschlossen ist, die einen Leitkanal mit Abweiser am Nachlaufrand der Aufnahmekammer bildet und unter Abstreifung aus den Taschen vorstehenden Saatgutkörner die Einzelkörner in ihren Taschen hält. Ein solches Handsägerät ist aus dem Prospekt der Firma Saat- und Erntetechnik GmbH « Einkorndrille Pillenzwerg » bekannt. Bei diesem Gerät sind mehrere hinsichtlich der Taschengröße unterschiedliche Zellenräder vorgesehen, die auswechselbar auf einer festen Achse aufgeschoben und direkt mit der Antriebsradscheibe kuppelbar sind. Dies bedingt, daß das Zellenrad ständig mit der gleichen Geschwindigkeit umläuft wie das auf dem Boden abrollende Antriebsrad.

Der Erfindung liegt die Aufgabe zugrunde, ein gattungsgemäßes einfach und billig herzustellendes Handsägerät so zu verbessern, daß ein zuverlässiges Ablegen der Saatkörner in vorbestimmten Abstand gewährleistet und eine optimale Ausnutzung des Saatgutes ermöglicht wird.

Gelöst wird die gestellte Aufgabe durch die im Kennzeichnungsteil des Patentanspruchs 1 angegebenen Merkmale. Durch das schaltbare Untersetzungsgetriebe wird es möglich, das Zellenrad mit einer Drehzahl anzutreiben, die kleiner ist als die Antriebsdrehzahl der Antriebsradscheibe. Hierdurch kann der Abstand verändert werden, mit dem die aus den Taschen fallenden Einzelkörner in der Saatrille abgelegt werden.

Es ist zwar durch die « Betriebsanleitung und Ersatzteilliste für die Einkorndrille IR2, 1963 der Firma Kleine » bereits ein Sägerät bekanntgeworden, bei dem zwischen der Antriebsradscheibe und dem Zellenrad ein Untersetzungsgetriebe vorgesehen ist. Hierbei handelt es sich aber um ein Kettenradgetriebe ohne Schaltmöglichkeit und das Zellenrad ist mit seiner Achse versetzt zur Radachse angeordnet, was in Verbindung mit den Kettentrieb einen komplizierten Aufbau ergibt.

Gemäß einer Ausführung der Erfindung kann nach Anspruch 2 außer dem Zellenrad für das Grobsaatgut noch eine von der Antriebsradscheibe angetriebene Trommel für Feinsaatgut vorgesehen werden, wobei das Zellenrad auf der einen Seite der Radscheibe und die Sätrommel auf der anderen Seite der Radtrommel angeordnet ist. Die Sätrommel kann dabei gemäß DE-U-79 13 928 ausgebildet sein. Auch hierbei ergeben sich ebenso wie bei Verwendung unterschiedlicher Zellräder mit unterschiedlicher Taschengröße, Vorteile im Hinblick auf das Ablegen der Saatkörner, weil durch die jeweilige Getriebeeinstellung der Abstand der abgelegten Samenkörner auf deren Größe abgestimmt werden kann und weil außerdem die Geschwindigkeit, mit der die Ablage erfolgt, der Vorschubgeschwindigkeit angepaßt und optimiert werden kann.

Weitere zweckmäßige Ausgestaltungen der Erfindung ergeben sich aus den Unteransprüchen.

Nachstehend werden zwei Ausführungsbeispiele der Erfindung anhand der Zeichnung beschrieben. In der Zeichnung zeigen :

Fig. 1 eine Seitenansicht einer ersten Ausführungsform eines erfindungsgemäß ausgebildeten Handsägerätes ;

Fig. 2 eine Ansicht in Richtung des Pfeiles II gemäß Fig. 1 ;

Fig. 3 eine Rückansicht in Richtung des Pfeiles III gemäß Fig. 2 betrachtet ;

Fig. 4 einen Schnitt nach der Linie IV-IV gemäß Fig. 3 ;

· Fig. 5 eine perspektivische auseinandergezogene Darstellung einer zweiten Ausführungsform eines erfindungsgemäß ausgebildeten Handsägerätes.

Fig. 6 einen vertikalen Axialschnitt des Handsägerätes gemäß Fig. 5.

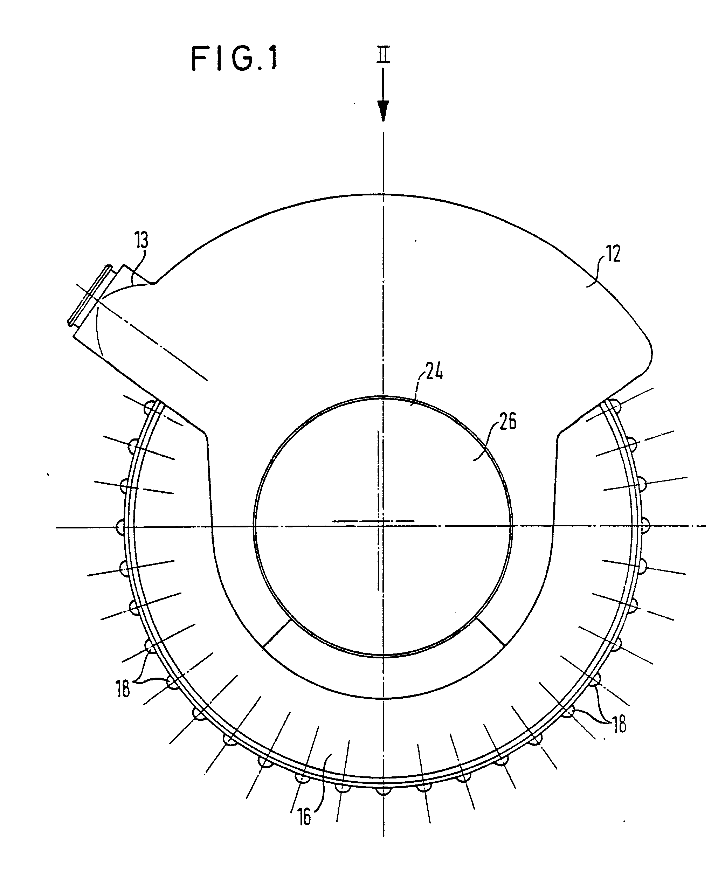

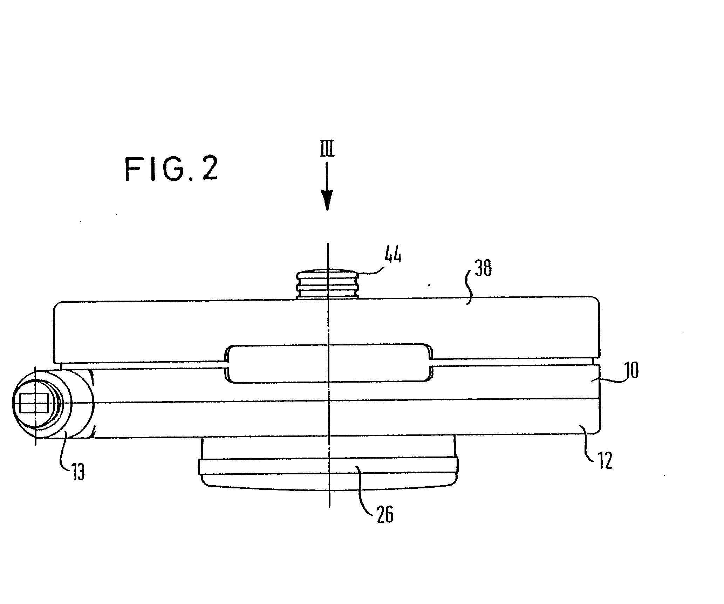

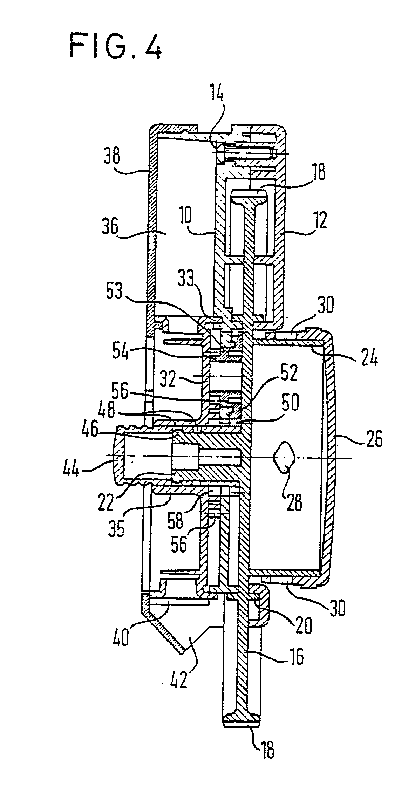

Das Handsägerät gemäß Figur 1 bis 4 weist zwei Gehäuseschalen 10 und 12 auf, die eine Stielkupplung 13 bilden und durch Schrauben 14 miteinander verbunden sind. Zwischen den Gehäuseschalen 10 und 12 ist eine an ihrem äußeren Umfang mit Wellungen 18 versehene Radscheibe 16 über zwei seitliche Ringstege 20 drehbar gelagert. Mit der Radscheibe 16 fest verbunden ist ein nach einer Seite vorstehender zentraler Wellenstummel 22. Auf der anderen Seite steht ein Ringbund 24 konzentrisch vor, der einen Saatgutbehälter bildet und mit einem übergreifenden Deckel 26 verschließbar ist. Der Ringbund 24 weist Löcher 28 auf, mit denen Löcher 30 des Deckels durch Verdrehen desselben auf dem Ringbund voll oder teilweise zur Deckung gebracht werden können. Innerhalb des Saatgutbehälters sind nicht dargestellte radiale Schaufeln angeordnet, die jeweils eine Sektorkammer abteilen, der jeweils eines der Löcher 28 zugeordnet sind. Diese gemäß Fig. 4 auf der rechten Seite der Radscheibe 16 angeordnete Sävorrichtung entspricht im wesentlichen der Sävorrichtung gemäß der DE-U-79 13 925.

Auf der gemäß Fig. 4 linken Seite der Radscheibe 16 befindet sich eine weitere Sävorrichtung, die insbesondere zum Austragen von erbsenartigem Saatgut oder Grobsaatgut dient, während die rechts angeordnete Sävorrichtung bevorzugt für Feinsaat bestimmt ist.

Diese weitere Sävorrichtung weist ein Zellenrad 32 auf, das mit seinem äußeren axialen Ringflansch 33 in einer axialen Ringnut der Gehäuseschale 10 drehbar gelagert ist und mit einer zentralen Hohlnabe 35 den Wellenstummel 22 und einen drehfest auf dem Wellenstummel verschiebbar gelagerten Stellknopf 44 umschließt. Das Zellenrad 32 ist an seinem äußeren Umfang mit Taschen 34 versehen, die von napfartigen Vertiefungen am äußeren Umfang gebildet und durch einen Ringsteg als Boden abgeschlossen sind. Über dem Zellenrad 32 befindet sich die Aufnahmekammer 36 für das Saatgut, die durch einen Gehäusedeckel 38 abgeschlossen ist, der auf einen vorstehenden Steg der Gehäuseschale 10 aufsetzbar ist. Dieser Deckel trägt einen angeformten, in geringem Abstand zum äußeren Umfang des Zellenrades verlaufenden, bogenförmigen Steg 40, der außenseitig den Leitkanal begrenzt, der zwischen dem sich über eine größere Bogenlänge erstreckenden Auslaufs der Kammer 36 bis zu einer ebenfalls einem Deckel angeformten Ablaufrutsche 42 erstreckt.

Der Stellknopf 44, der mit dem Wellenstummel 22 über eine Nut-Federverbindung oder auf sonstige Weise drehfest verbunden ist, trägt am inneren Ende einen Zahnkranz 50, der in der in Fig. 4 dargestellten Stellung mit einem Zahnrad 52 kämmt, das mittels eines Ringbundes 53 in der Gehäuseschale 10 drehbar gelagert ist. Mit dem Zahnrad 52 ist ein weiteres Zahnrad 54 kleineren Durchmessers verbunden, das mit einem Außenzahnkranz 56 kämmt, der am Zellenrad 32 angeformt ist. Konzentrisch zu dem Außenzahnkranz 56 trägt das Zellenrad 32 einen Innenzahnkranz 58, in das der Zehnkranz 50 des Stellknopfes 44 durch axiale Verschiebung (gemäß Fig. 4 nach links) eingekuppelt werden kann. Die beiden Kupplungsstellungen des Stellknopfes sind durch Warzen 46 begrenzt, die vom Wellenstummel 22 nach außen vorstehen und in axial beanstandete Löcher 48 der Stellknopfhülse eingreifen.

Wenn der Stellknopf 44 gemäß Fig. 4 nach links außen gezogen ist und sein Zahnkranz 50 in den Innenzahnkranz 58 des Zellenrades 32 eingreift, dann läuft das Zellenrad 32 mit der gleichen Geschwindigkeit um wie die sich auf dem Boden abwälzende Radscheibe 16. Befindet sich dagegen der Stellknopf in der aus Fig. 4 ersichtlichen Stellung, dann erfolgt der Antrieb des Zellenrades 32 über das Zahnrad 52, das weitere Zahnrad 54 und den Außenzahnkranz 56 mit einer Untersetzung ins Langsame von vorzugsweise etwa 3 : 1. Dadurch kann der Abstand zwischen zwei aufeinanderfolgend ausgetragenen Samen eingestellt werden.

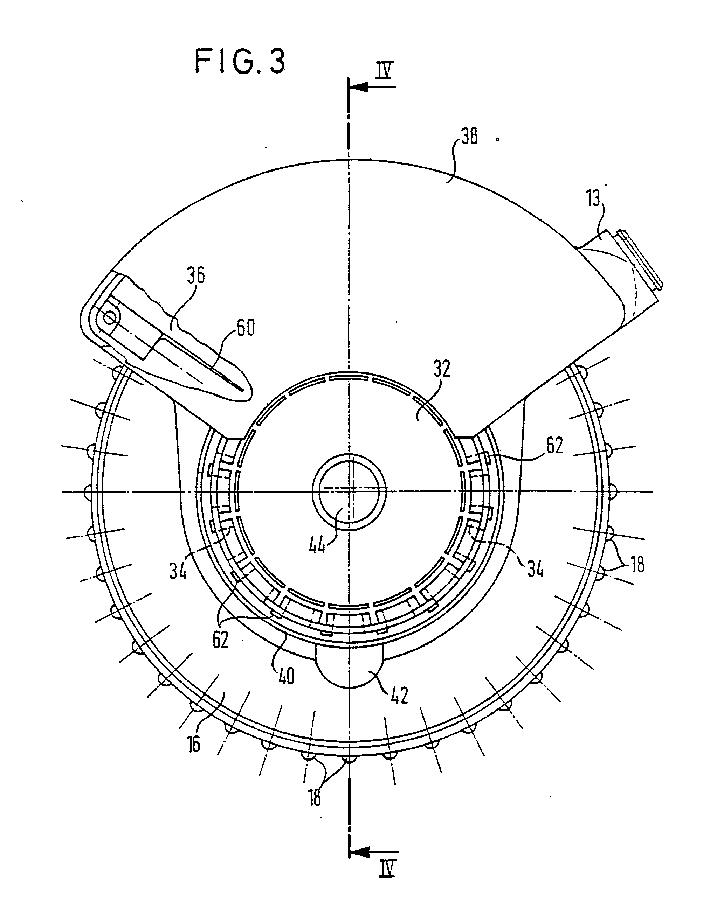

Wie aus Fig. 3 ersichtlich, ist am Nachlaufende der Aufnahmekammer 36 eine Abstreifklinge 60 gelagert, an die die bogenförmige Leitwand 40 des Leitkanals anschließt. Diese Abstreifklinge bewirkt, daß jeweils nur ein Einzelkorn in eine Tasche eintreten kann, selbst wenn dieses Einzelkorn die Tasche nicht voll ausfüllt. Anstelle dieses Abstreifers 60 oder zusätzlich zu diesem kann im Bereich des Einlaufs des Leitkanals eine Leitrolle angeordnet sein, die am Umfang Rillen oder Zähne aufweist und im Gehäuse gelagert ist. Der Antrieb dieser Rolle erfolgt durch Zahneingriff mit einem rotierenden Teil, beispielsweise dem Zellenrad oder einem der Zahnräder des Getriebes. Die Anordnung ist dabei derart getroffen, daß diese Leitrolle (in der Zeichnung nicht dargestellt) im Gegensinn zu dem von der Radscheibe 16 angetriebenen Zellenrad 32 läuft. Dabei dreht sich diese Leitrolle vier- bis fünfmal schneller als das Zellenrad.

Das Zellenrad 32 dreht sich auf der Befüllstrecke in der Aufnahmekammer 36 über einen relativ breiten Sektor und in diesem Sektor fallen die Einzelsamenkörner aufgrund ihres Eigengewichtes in die Zellen. Die Abstreiferklinge 60 bzw. die Leitrolle sorgen dafür, daß die Aufnahmekammer 36 nach außen abgeschottet ist, und außerdem werden nur jeweils so viele Einzelkörner zur Aussaat über eine Tasche freigegeben, wie in diese Tasche hineinpassen (und nicht solche, die überstehen würden). In der Regel nimmt jede Tasche jeweils nur ein Samenkorn auf.

Um zu verhindern, daß groberes Saatgut in der Aufnahmekammer eine Brücke bildet, aus der sich ein Einzelkorn nicht mehr lösen kann, können seitlich der Taschen und zwischen diesen am äußeren Umfang des Zellenrades Mischflügel 62 vorgesehen sein, die in Figur 3 angedeutet sind.

Durch den Leitkanal, dessen Begrenzungswand 40 die Samenkörner in ihren Taschen hält, wird bewirkt, daß die Einzelkörner erst im unteren Bereich über die Rutsche 42 aus den Taschen austreten, und zwar jeweils immer mit der gleichen geringen Fallhöhe. Bei geringen Korngewichten können größere Fallhöhen von beispielsweise 5 cm zu unterschiedlichen Kornabständen führen, weil das Einzelkorn vom Boden abprallen kann.

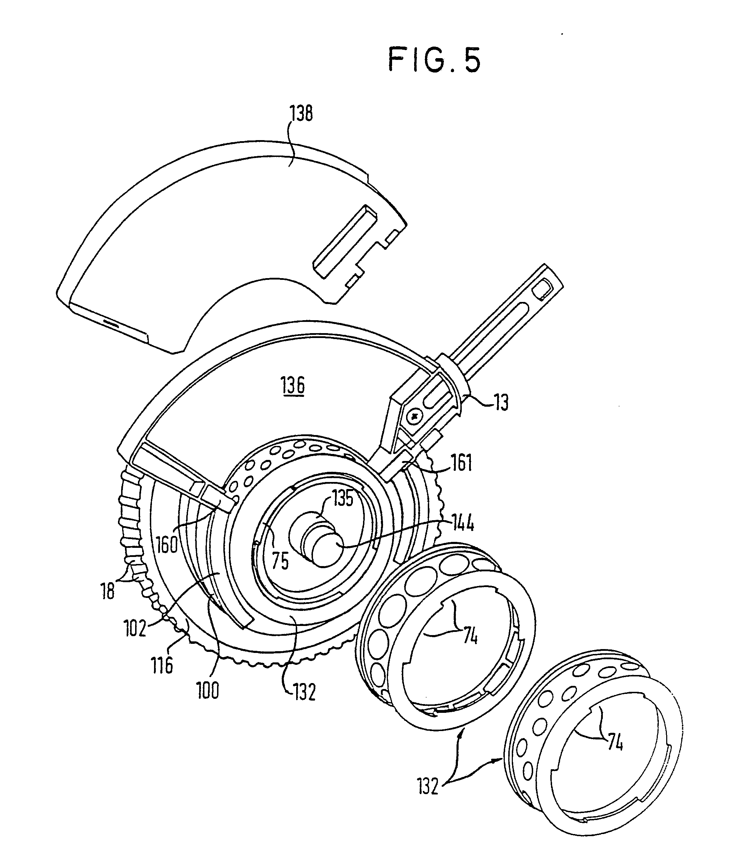

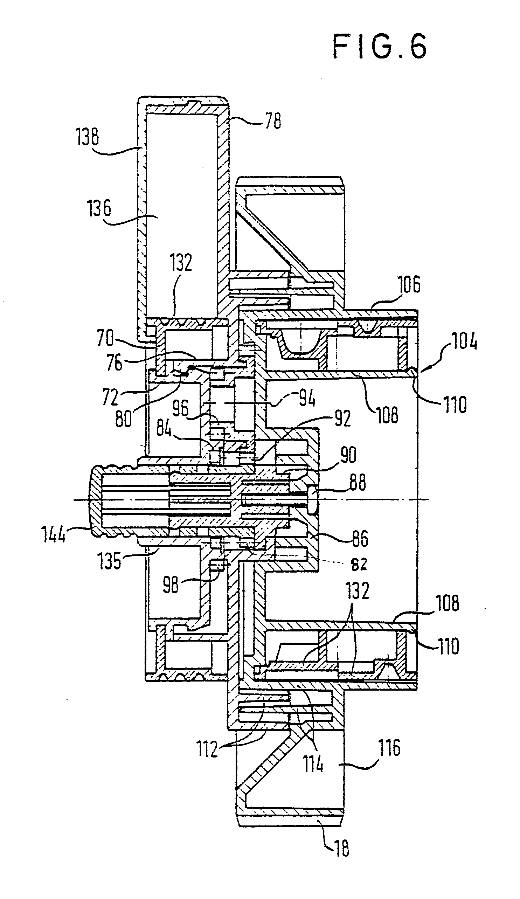

Bei dem Ausführungsbeispiel nach Figur 5 und 6 ist das ringförmig ausgebildete Zellenrad 132 mittels eines Innenflansches 70 auf einer Trägertrommel 72 mittels eines Bajonettverschlusses 74, 75 auswechselbar aufsetzbar. Diese Trägertrommel 72 ist in einem zylindrischen Ringsteg 76 des Gehäuses 78 gelagert und durch eine Rastverriegelung 80 axial gesichert. Diese Trägertrommel weist eine Hohlnabe 135 auf, die den sie axial durchsetzenden Getriebestellknopf 144 führt. Dieser Stellknopf trägt einen Außenzahnkranz 82, der in der dargestellten Stellung (Stellknopf 144 gemäß Fig. 6 nach rechts verschoben) mit einem Zahnrad 92 in Eingriff steht, welches um eine Achse 94 im Gehäuse 78 drehbar gelagert ist. Das Zahnrad 92 ist mit einem Zahnrad kleineren Durchmessers fest verbunden, welches in Eingriff mit einem Außenzahnkranz 98 der der Trägertrommel 72 steht. Die Nabe 86 der Radscheibe 116 ist über eine Schraube 88 und axiale Kupplungsklauen 90 drehfest mit dem Stellknopf 144 verbunden, so daß in der Untersetzungsstellung gemäß Figur 6 Radscheibe 116 über den drehfest mit ihr verbundenen Außenzahnkranz 82 das Zahnrad 92 der Vorgelegewelle antreibt und das mit diesem drehfest verbundene Zahnrad 96 über den Außenzahnkranz 98 das Zellenrad 132 mit verminderter Geschwindigkeit antreibt. Wird der Stellknopf 144 gemäß Figur 6 nach links verschoben, dann kommt der Zahnkranz 82 außer Eingriff mit dem Zahnrad 92 und greift in eine Innenverzahnung 84 eines Trommelflansches der Trägertrommel 72 ein. Im dieser Stellung ergibt sich eine direkte Übersetzung zwischen der Radscheibe 116 und dem Zellenrad 132.

Die Aufnahmekammer 136 ist von einem transparenten sektorförmigen Deckel 138 verschlossen, der durch Verdrehen in Verriegelungseingriff mit dem Gehäuse gebracht werden kann. Wie aus Fig. 5 ersichtlich, ist die Aufnahmekammer 136 radial innen offen und wird an dieser Stelle durch das Zellenrad 132 begrenzt. Am Nachlaufende des Aufnahmebehälters 136 ist in eine Gehäuseführung ein als Abstreifer dienender Block 160 aus elastomerem Material eingesetzt, der in geringem Abstand zu der äußeren Ringfläche des Zellenrades liegt und zu große Körner abstreift, und solche Körner, die nur in einem geringen Ausmaß aus den Taschen des Zellenrades vorstehen, hindurchtreten läßt. Ein ähnlicher Block 161 ist am vorlaufende der Aufnahmekammer angeordnet, um zu verhindern, daß an dieser Stelle Körner austreten.

Von dem Abstreiferblock erstreckt sich innerhalb des den bogenförmigen Leitkanal bildenden Gehäuseflansches 100 ein bogenförmig gekrümmter Streifen 102, ebenfalls aus elastomerem Material, der eine nachgiebige Außenwand für die vom Zellenrad mitgetragenen Körner bildet.

Die Radscheibe 116 weist eine Aufnahme 104 zur Lagerung der jeweils nicht benutzten Zellenräder 132 auf. Die einem Handsägerät zugeordneten Zellenräder 132 unterscheiden sich hinsichtlich Anzahl, Größe und Verteilung der Taschen am Umfangsrand, die zur Aufnahme der Körner bestimmt sind. Dies ist insbesondere aus Fig. 5 erkennbar. Die jeweils nicht benötigten beiden Zellenräder 132 werden in der Aufnahme 104 abgelegt, die außen von einem zylindrischen Flansch 106 begrenzt ist und innen drei im gleichen Winkelabstand zueinander stehende, radial nach innen federnde gekrümmte Stege 108 aufweist, über die der Innenflansch 70 der Zellenräder mit der Bajonettausnehmung 74 geschoben werden kann. Durch eine Rastnase 110 erfolgt eine axiale Festlegung.

Wie aus Figur 6 ersichtlich, greifen zylindrische Ringstege 112 des Gehäuses und 114 der Radscheibe ineinander und stellen eine Drehlagerung her, wobei zur Durchführung des Schaltvorganges eine axiale Verschiebung dazwischen möglich ist.

**Patentansprüche**

1. Handsägerät mit einer am Boden abrollbaren Antriebsradscheibe (16) und einem hiervon angetriebenen koaxial liegenden Zellenrad (32), das am Umfang Taschen (34) zum Einzeltransport der Saatgutkörner aus einer oberen, sich über einem offenen Sektor des Zellenrades erstreckenden Aufnahmekammer (36) nach einer in Bodennähe befindlichen Abgabestation (42) aufweist, wobei zwischen Aufnahmekammer (36) und Abgabestation (42) der Umfang des Zellenrades von einer kreisbogenförmig gekrümmten Wand (40) umschlossen ist, die einen Leitkanal mit Abweiser (60 ; 160) am Nachlaufrand der Aufnahmekammer bildet und unter Abstreifung aus den Taschen (34) vorstehenden Saatgutkörner die Einzelkörner in ihren Taschen (34) hält, dadurch gekennzeichnet, daß zwischen der Antriebsradscheibe (16, 116) und dem Zellenrad (32 ; 132) ein schaltbares Untersetzungsgetriebe, z. B. in Form eines Zahngetriebes (50, 52, 54, 56, 58 ; 82, 84, 92, 96, 98) angeordnet ist.

2. Handsägerät nach Anspruch 1, dadurch gekennzeichnet, daß außer dem Zellenrad (32) für das Grobsaatgut eine von der Antriebsradscheibe (16) angetriebene Trommel (24, 26) für Feinsaatgut vorgesehen ist, und daß das Zellenrad (32) auf der einen Seite der Radscheibe (16) und die Sätrommel (24, 26) auf der anderen Seite der Radscheibe (16) angeordnet ist.

3. Handsägerät nach Anspruch 1, dadurch gekennzeichnet, daß als Abweiser eine profilierte Walze ausgebildet ist, die in Gegenrichtung zum Zellenrad angetrieben ist, wobei die Walze etwa mit der fünf- bis sechsfachen Drehzahl der Radscheibe (16) antreibbar ist.

4. Handsägerät nach Anspruch 1, dadurch gekennzeichnet, daß die Radscheibe (16) mit einem zentralen Wellenstummel (22) drehfest verbunden ist, auf welchem drehfest axial verschieblich ein Stellknopf (44) sitzt, der von der Nabe des Zellenrades umschlossen ist und eine direkte Kupplung bzw. eine Kupplung über ein Vorgelege ermöglicht.

5. Handsägerät nach Anspruch 1, dadurch gekennzeichnet, daß das Zellenrad (132) auswechselbar ist und ein das Getriebeabtriebsglied bildender Träger (72) das Zellenrad (132) beispielsweise über einen Bajonettverschluß (74, 75) kuppelt, wobei Zellenräder mit unterschiedlicher Lochtiefe und Lochabstand in einer seitlichen Aufnahme (104) der Radscheibe (16) einsteckbar sind.

6. Handsägerät nach Anspruch 1, dadurch gekennzeichnet, daß ein zweckmäßigerweise transparenter sektorförmiger Deckel (38, 138) die Aufnahmekammer (36, 136) seitlich abschließt und durch Verdrehen entriegelbar ist.

7. Handsägerät nach den Ansprüchen 1, 4 und 5, dadurch gekennzeichnet, daß die Radscheibe (116) mit zylindrischen Ringstegen (114) im Gehäuse (112) gelagert und mit dem Stellknopf (144) axial verstellbar ist, und daß die Stellknopfnabe entweder direkt oder über das Untersetzungsgetriebe mit dem Zellenradträger kuppelbar ist.

8. Handsägerät nach einem der Ansprüche 1 bis 7, dadurch gekennzeichnet, daß benachbart zu den Taschen (34) und zwischen diesen seitlich abwechselnd Mischflügel (62) angeordnet sind.

**Claims**

1. A hand-operated sowing device comprising a drive wheel disk (16) rollable on the ground and a coaxially located cell wheel (32) driven thereby, which comprises on its circumference compartments (34) for the individual transfer of the seed grains from an upper receiving chamber (36) extending over an open sector of the cell wheel to a discharge point (42) in the vicinity of the ground, the circumference of the cell wheel being surrounded by an arcuately curved wall (40) between the receiving chamber (36) and the discharge point (42), which wall (40) forms a guide channel with a rejector (60 ; 160) at the tail edge of the receiving chamber and holds the individual grains in their compartments (34) while stripping off the seed grains projecting out of the compartments (34), characterized in that between the drive wheel disk (16, 116) and the cell wheel (32 ; 132) there is arranged a switch-selectable reduction gear, e. g. in the form of a toothed gearing (50, 52, 54, 56, 58 ; 82, 84, 92, 96, 98).

2. A hand-operated sowing device according to claim 1, characterized in that in addition to the cell wheel (32) for coarse seeds there is provided a drum (24, 26) for fine seeds driven by the drive wheel disk (16), and in that the cell wheel (32) is arranged on one side of the wheel disk (16) and the sowing drum (24, 26) on the other side of the wheel disk (16).

3. A hand-operated sowing device according to claim 1, characterized in that the rejector is constructed as a shaped roll, which is driven in the opposite direction from the cell wheel, the roll being capable of being driven at approximately five to six times the rotational speed of the wheel disk (16).

4. A hand-operated sowing device according to claim 1, characterized in that the wheel disk (16) is connected unrotatably with a central shaft butt (22), on which there is located unrotatably but axially displaceably an adjusting knob (44), which is surrounded by the hub of the cell wheel and makes possible direct coupling or coupling via a countershaft.

5. A hand-operated sowing device according to claim 1, characterized in that the cell wheel (132) is replaceable and a carrier (72) forming the driven gear member couples the cell wheel (132) for example by means of a bayonet fixing (74, 75), cell wheels with differing hole depths and hole separations being insertable in a lateral receiver (104) on the wheel disk (16).

6. A hand-operated sowing device according to claim 1, characterized in that an appropriately transparent, sector-shaped cover (38, 138) closes the receiving chamber (36, 136) laterally and can be unlocked by rotation.

7. A hand-operated sowing device according to any one of claims 1, 4 and 5, characterized in that the wheel disk (116) with cylindrical annular webs (114) is accommodated in the housing (112) and can be axially adjusted with the adjusting knob (144), and in that the adjusting knob hub may be either directly coupled with the cell wheel carrier or through the intermediary of the reduction gear.

8. A hand-operated sowing device according to any one of claims 1 to 7, characterized in that adjacent the compartments (34) and alternating laterally between them there are arranged mixing vanes (62).

**Revendications**

1. Semoir à main avec un disque de roue d'entraînement (16) pouvant rouler sur le sol et une roue cellulaire coaxiale (32) entraînée par ce dernier et présentant sur la circonférence des poches (34) pour le transport individuel des grains de semence à partir d'une chambre d'alimentation (36) qui s'étend sur un secteur ouvert de la roue cellulaire vers un poste de distribution (42) situé à proximité du sol, la circonférence de la roue cellulaire, entre la chambre d'alimentation (36) et le poste de distribution (42), étant entourée par une paroi (40) courbée en arc de cercle qui forme un conduit de guidage avec déflecteur (60 ; 160) sur le bord postérieur de la chambre d'alimentation et maintient les grains de semence individuels dans les poches (34), avec raclage des grains de semence dépassant desdites poches (34), caractérisé en ce qu'un réducteur commutable, par exemple sous la forme d'un engrenage (50, 52, 54, 56, 58 ; 82, 84, 92, 96, 98), est disposé entre le disque de roue d'entraînement (16, 116) et la roue cellulaire (32 ; 132).

2. Semoir à main selon la revendication 1, caractérisé en ce qu'un tambour (24, 26) pour des semences fines entraîné par le disque de roue d'entraînement (16) est prévu en plus de la roue cellulaire (32) pour les semences grossières ; et que la roue cellulaire (32) est disposée d'un côté du disque de roue (16) et le tambour semoir (24, 26) de l'autre côté du disque de roue (16).

3. Semoir à main selon la revendication 1, caractérisé en ce que le déflecteur est constitué par un tambour profilé qui est entraîné en sens inverse par rapport à la roue cellulaire, le tambour pouvant être entraîné à une vitesse correspondant à environ cinq à six fois la vitesse de rotation du disque de roue (16).

4. Semoir à main selon la revendication 1, caractérisé en ce que le disque de roue (16) est relié de manière solidaire en rotation à un bout d'arbre central (22) sur lequel est monté de manière déplaçable mais solidaire en rotation un bouton de réglage (44) qui est entouré par le moyeu de la roue cellulaire et permet un accouplement direct voire un accouplement par l'intermédiaire d'un arbre de renvoi.

5. Semoir à main selon la revendication 1, caractérisé en ce que la roue cellulaire (132) est interchangeable, et qu'un support (72) formant l'élément mené de l'engrenage assure l'accouplement de la roue cellulaire (132), par exemple par l'intermédiaire d'un emboîtement à baïonnette (74, 75), des roues cellulaires avec des profondeurs et écartements de trous variables pouvant être introduites dans un logement latéral (104) du disque de roue (16).

6. Semoir à main selon la revendication 1, caractérisé en ce qu'un couvercle (38, 138) en forme de secteur et, de préférence, transparent assure la fermeture latérale de la chambre d'alimentation (36, 136) et peut être déverrouillé par rotation.

7. Semoir à main selon l'une quelconque des revendications 1, 4 et 5, caractérisé en ce que le disque de roue (116) est monté avec des nervures annulaires cylindriques (114) dans le boîtier (112) et peut être déplacé axialement au moyen d'un bouton de réglage (144), et que le moyeu du bouton de réglage peut être couplé directement ou par l'intermédiaire du réducteur avec le support de la roue cellulaire.

8. Semoir à main selon l'une quelconque des revendications 1 à 7, caractérisé en ce que des palettes mélangeuses (62) sont disposées latéralement, en alternance, au voisinage des poches (34) et entre celles-ci.

# FIG.1

# FIG. 2

III ↓

44

38

10

13

12

26

0 147 533

2

# FIG.3

# FIG.4

# FIG. 5

# FIG.6